Europäisches Patentamt

European Patent Office

Office européen des brevets

(11) Veröffentlichungsnummer: **0 437 250 A2**

# (12) EUROPÄISCHE PATENTANMELDUNG

(21) Anmeldenummer: **91100221.0**

(22) Anmeldetag: **09.01.91**

(51) Int. Cl.⁵: **F23Q 7/00**

(30) Priorität: **12.01.90 DE 9000277 U**

(43) Veröffentlichungstag der Anmeldung:
**17.07.91 Patentblatt 91/29**

(84) Benannte Vertragsstaaten:
**DE ES FR GB IT SE**

(71) Anmelder: **Adam Opel Aktiengesellschaft**
**Bahnhofsplatz 1 Postfach 17 10**
**W-6090 Rüsselsheim(DE)**

(72) Erfinder: **Kleinböhl, Helmut**
**Schillerstrasse 5**
**W-6086 Riedstadt(DE)**

(74) Vertreter: **Bergerin, Ralf, Dipl.-Ing. et al**
**Adam Opel Aktiengesellschaft Bahnhofplatz**
**1 Postfach 17 10**
**W-6090 Rüsselsheim(DE)**

(54) **Elektrischer Zigarettenanzünder.**

(57) Bei einem elektrischen Zigarettenanzünder ist in der Gehäusewandung (2) eine Sicke (21) vorgesehen, die den Raum für eine Lampe (19) begrenzt. Die Lampe wird durch Anschlußleitungen (23a, 23b) und Sicke im Gehäuse des Zigarettenanzünders fixiert und gehalten. Dadurch kann die Konstruktion des Zigarettenanzünders vereinfacht und der Teilebedarf reduziert werden.

FIG. 1

EP 0 437 250 A2

## ELEKTRISCHER ZIGARETTENANZÜNDER

Die Erfindung betrifft einen elektrischen Zigarettenanzünder, insbesondere für Kraftfahrzeuge, mit einem in ein Gehäuse einsteckbaren und nach Einschaltung und Erwärmung herausnehmbaren Glühkopf, sowie einer Lampe mit Anschlußleitungen, wobei die Lampe durch eine in einer Wandung des Gehäuses befindliche Gehäuseöffnung das Gehäuseinnere und -äußere ausleuchtet. Die Lampe ermöglicht durch die Ausleuchtung des Gehäuseinneren ein einfaches Einstecken des Glühkopfes in das Gehäuse bei Dunkelheit, durch das aus dem Gehäuse gelangende Licht kann beispielsweise ein Aschergehäuse ausgeleuchtet werden.

Ein elektrischer Zigarettenanzünder der genannten Art ist beispielsweise aus dem deutschen Gebrauchsmuster 1 803 741 bekannt. Dieser weist einen am Gehäuse befestigten Halter auf, mit dem eine Lampenfassung verbunden ist, die der Aufnahme der Lampe dient. Die Anschlußleitungen kontaktieren dabei die Lampenfassung. Nachteilig ist bei diesem elektrischen Zigarettenanzünder die aufwendige Konstruktion und der hohe Teilbedarf in Zusammenhang mit der Lampe.

Es ist Aufgabe der vorliegenden Erfindung, einen elektrischen Zigarettenanzünder der genannten Art so weiterzubilden, daß die Lampe bei diesem besonders einfach gehalten wird und die Anzahl der Bauteile zum Fixieren der Lampe entscheidend reduziert ist.

Gelöst wird die Aufgabe dadurch, daß die Gehäusewandung eine Sicke aufweist und die Lampe durch die Sicke und die Anschlußleitungen im Gehäuse gehalten wird. Die Sicke begrenzt dabei den Raum für die Lampe und fixiert diese zusammen mit den Anschlußleitungen. Um eine möglichst weitgehende Fixierung der Lampe bereits mittels der Anschlußleitungen sicherzustellen, sollten diese als relativ steife Drähte und Bestandteil der Lampe sein.

Die Sicke selbst kann auf unterschiedliche Art und Weise gebildet sein. Eine bevorzugte Ausführungsform sieht vor, daß die Sicke geschlitzt ausgebildet und hierdurch die Gehäuseöffnung gebildet ist. Unmittelbar im Bereich der Sicke befindet sich damit die Gehäuseöffnung, so daß das von der Lampe ausgesandte Licht direkt das Gehäuseinnere und -äußere ausleuchten kann. Gemäß einer vorteilhaften Weiterbildung sind die Sicke und die Gehäuseöffnung durch zwei benachbart zum Gehäuseboden in das Innere des Gehäusemantels gerichtete Gehäuselappen gebildet und ist der Gehäuseboden benachbart zur Sicke mit einem Durchgangsloch versehen, zur Aufnahme des Wendelbereiches der Lampe zwischen den Gehäuselappen und des Anschlußbereiches der Lampe in Loch. Die Lampe ist hierdurch nicht nur im Bereich der Sicke gehalten, sondern auch seitlich im Bereich des Durchgangsloches und zusätzlich durch die Anschlußleitungen. Aufgrund der Position des Loches im Anschlußbereich der Lampe können die Anschlußleitungen auf kurzem Weg mit den Kontakten des Zigarettenanzünders verbunden werden.

Eine besonders einfache Befestigungsmöglichkeit der Anschlußleitungen der Lampe mit dem eigentlichen Stecker für den Zigarettenanzünder ergibt sich, wenn die steckerseitigen Enden der Anschlußleitungen der Lampe zwischen leitenden, steckerseitigen Klemmplatten und Isolierplatten geklemmt sind. Vorteilhaft sollte das Anschließen der Anschlußleitungen in den Montagevorgang der Stecker des Zigarettenanzünders integriert sein.

Eine Weiterbildung sieht schließlich vor, daß beabstandet zu der im Bereich des Gehäusebodens angeordneten Sicke mit der Gehäuseöffnung eine weiter vom Gehäuseboden entfernt angeordnete zusätzliche Gehäuseöffnung vorgesehen ist. Während das in das Gehäuseinnere fallende Licht den Innenraum des Zigarettenanzünders und das durch die der Sicke zugeordnete Gehäuseöffnung gelangende Licht beispielsweise ein Aschergehäuse ausleuchtet, kann durch das durch die weitere Gehäuseöffnung gelangende Licht ein das Gehäuse des Zigarettenanzünders umgebender Leuchtring angestrahlt werden, der ein einfaches Auffinden des eingesetzten Glühkopfes ermöglicht.

Zum besseren Auffinden der Drucktaste bei Dunkelheit sind in der Schutz- und Führungsscheibe des Glühkopfes Öffnungen vorgesehen, durch die die Drucktaste aus transparentem Kunststoff und das Symbol angestrahlt werden.

Weitere Merkmale der Erfindung sind in der Beschreibung der Figuren und in den Unteransprüchen dargestellt, wobei bemerkt wird, daß alle Einzelmerkmale und alle Kombinationen von Einzelmerkmalen erfindungswesentlich sind.

In den Figuren ist die Erfindung anhand zweier Ausführungsformen beispielsweise dargestellt, ohne auf diese beschränkt zu sein. Es stellt dar:

Figur 1    eine erste Ausführungsform des erfindungsgemäßen Zigarettenanzünders mit integrierter Lampe, gezeigt in einem Längsschnitt,

Figur 2    eine Ansicht A gemäß Figur 1 des Gehäusebodens des Zigarettenanzünders,

Figur 3    ein Schnitt gemäß der Linie B-B in Figur 2 durch den Gehäuseboden,

Figur 4    eine Sickenvariante bei einem ansonsten gemäß der Darstellungen in die Figuren 1 bis 3 ausgebildeten Zigarettenanzünder, gezeigt in einer Ansicht X gemäß Figur 1,

Figur 5     eine Ansicht des Sickenbereiches des Zigarettenanzünders gemäß Pfeil Y in Figur 4,

Figur 6     eine Ansicht des Sickenbereiches des Zigarettenanzünders gemäß Pfeil Z in Figur 4 und

Figur 7     eine Ansicht gemäß Figur 4 vor der Herstellung der Sicke durch Einbiegen zweier Gehäuselappen.

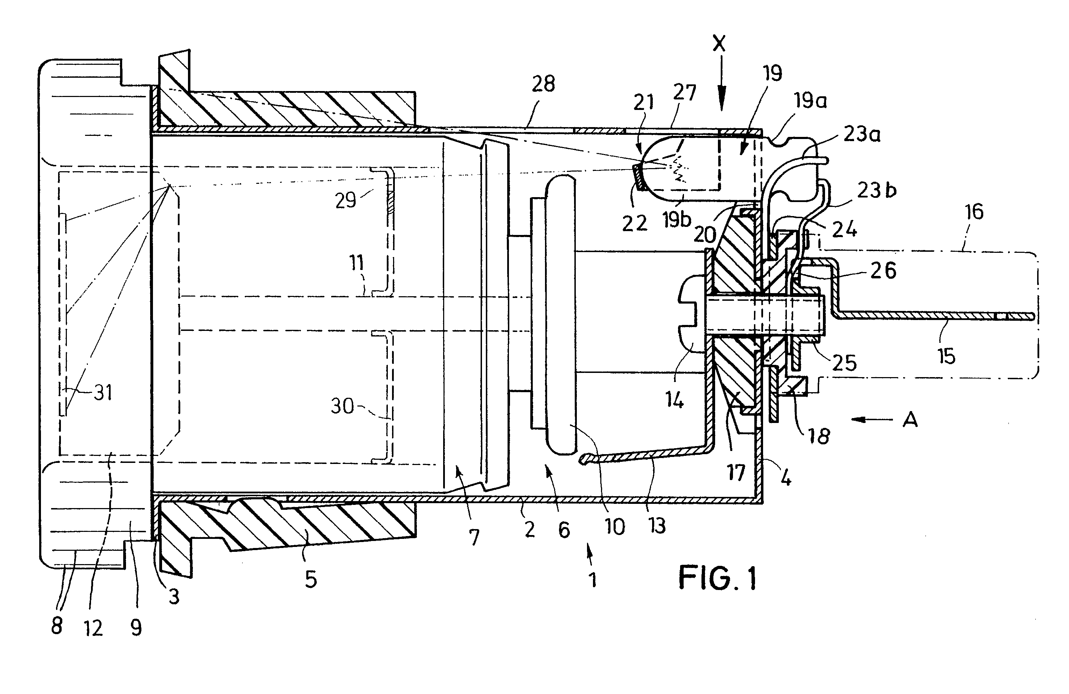

Die Figuren 1 bis 3 verdeutlichen den grundsätzlichen Aufbau des elektrischen Zigarettenanzünders. Dieser weist ein Gehäuse 1 auf, das aus einem zylindrischen Mantelbereich 2 mit Flanschansatz 3 und einem Boden 4 besteht. Im Bereich des Flanschansatzes 3 umschließt ein aus lichtdurchlässigem Kunststoffmaterial bestehender sogenannter Leuchtring 5 den zylindrischen Mantelbereich 2. Das Gehäuse 1 ist zusammen mit dem Leuchtring 5 in eine nicht näher gezeigte Ausnehmung im Armaturenbrett eines Kraftfahrzeugeseingesetzt. In die durch das Gehäuseinnere gebildete Gehäuseöffnung 6 ist das eigentliche Zigarettenanzünderelement 7 eingesteckt, das bezüglich Aufbau und Funktion grundsätzlich bekannt ist. Es weist im Bereich des Flanschansatzes 3 einen mit einer Riffelung 8 versehenen Greifring 9 auf, in dem eine von außen zugängliche Drucktaste 12 entgegen Federkraft in das Zigarettenanzünderelement 7 eindrückbar ist. Die Drucktaste 12 ist über eine Achse 11 mit einem Glühkopf 10 verbunden. Beim vollständigen Einschieben der Drucktaste 12 in das Zigarettenanzünderelement 7 (das heißt über die in Figur 1 gezeigte Position hinaus) gelangt der Glühkopf 10 in Anlage mit dem innerhalb des Gehäuses 1 angeordneten plattenförmigen Kontaktelement 13, das über eine Schraube 14 leitend mit einem ersten äußeren, gleichfalls plattenförmigen Stecker 15 in Verbindung steht. Der weitere Strompfad des Zigarettenanzünderelementes 7 ergibt sich über nicht näher gezeigte, gehäuseseitige Nasen, die das Zigarettenanzünderelement 7 in jeder beliebigen Stellung kontaktieren. Der Stromfluß erfolgt damit vom Zigarettenanzünderelement 7 zum zylindrischen Mantelbereich 2 und zum Boden 4, von dort zu einem mit den Boden 4 in leitender Verbindung stehenden zweiten, gleichfalls plattenförmigen Stecker 16. Ein ringförmiges Isolierelement 17 zwischen dem Boden 4 und dem plattenförmigen Kontaktelement 13 sowie ein ringförmiges Isolierelement 18 zwischen dem Boden 4 und dem Stecker 15 trennen die beiden Strompfade. In bekannter Art und Weise wird beim Eindrücken der Drucktaste 12 der Glühkopf 10 aufgeheizt, nach erfolgtem Aufheizvorgang springen Glühkopf 10 und Drucktaste 12 zurück, letzteres signalisiert damit die Zündbereitschaft des Zigarettenanzünders.

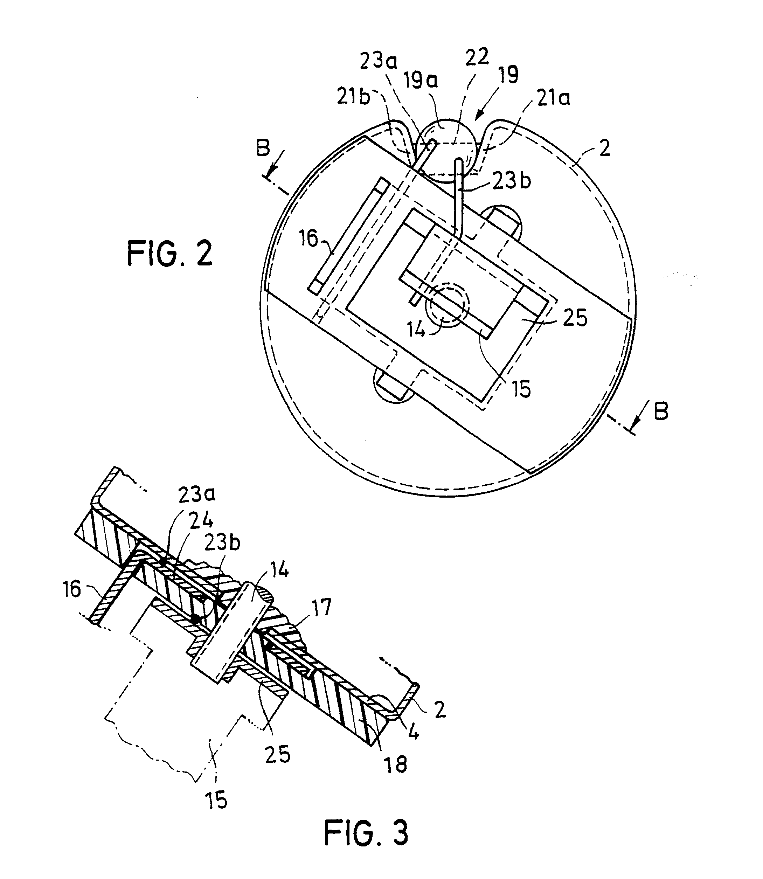

Im Gehäuse 1 ist im Bereich von Gehäuseboden 4 und zylindrischem Mantelbereich 2 eine Lampe 19 gehalten. Diese durchsetzt in ihrem Anschlußbereich 19a eine Bohrung 20 im Boden 4, deren Durchmesser geringfügig größer ist als der Lampendurchmesser im genannten Bereich. Der zylindrische Mantelbereich 2 weist im Bereich des Gehäusebodens 4 eine in das Gehäuseinnere gerichtete Sicke 21 auf, die den Wendelbereich 19b der Lampe 19 zumindest teilweise unschließt. Wie der Darstellung der Figuren 1 und 2 zu entnehmen ist, ist die Sicke 21 durch zwei nach innen gebogene Gehäuselappen 21a und 21b gebildet, deren dem Gehäuseboden 4 abgewandten Enden mittels eines Steges 22 miteinander verbunden sind. Die Sicke 21 untergreift damit mit den Gehäuselappen 21a und 21b den Wendelbereich 19b der Lampe 19, während deren Steg 22 als Anschlag für die Lampe 19 dient und der Wendelbereich 19a der Lampe 19 durch die Bohrung 20 mit Spiel geführt ist. Der Anschlußbereich 19a der Lampe 19 weist zwei Bestandteil der Lampe 19 bildende Apschlußleitungen 23a und 23b auf, die unmittelbar aus dem Glaskörper der Lampe 19 ragen. Die Anschlußleitungen bestehen aus einem steifen Draht. Die Verbindung der Anschlußleitungen 23a und 23b mit den stromführenden Teilen des Zigarettenanzünders erfolgt durch eine einfache Klemmverbindung. Hierzu ist zwischen dem Gehäuseboden 4 und dem Isolierelement 18 eine Leiterplatte 24 vorgesehen, ferner weist ein den Stecker 15 tragender Leiterflansch 25 auf seiner dem Isolierelement 18 zugewandten Seite einen Schlitz 26 auf. Bei weitgehend gelöster Schraube 14 und damit einem Zwischenraum zwischen dem Isolierelement 17 und dem Boden 4 sowie dem Boden und der Leiterplatte 24 bzw. dem Isolierelement 18, ferner dem Isolierelement 18 und dem Leiterflansch 25 kann die Anschlußleitung 23a zwischen dem Gehäuseboden 4 und die Leiterplatte 24 und die Anschlußleitung 23b zwischen das Isolierelement 18 und den Leiterflansch 25, dort in den Schlitz 26 eingesteckt werden. Nach dem Anziehen der Schraube 14 verspannen sich die genannten Teile gegeneinander und klemmen dabei die Apschlußleitungen 23a und 23b leitend im Sinne der beiden Strompfade. Durch die feste Verbindung der Anschlußleitungen 23a und 23b im Bereich der Stekker 15 und 16 ist aufgrund der steifen Ausbildung der Drähte sichergestellt, daß die Lampe 19 in ihrer in die Sicke 21 eingesetzten Stellung verbleibt, ohne daß es hier zu einer separaten Lampenfassung bedarf.

Wie der Darstellung der Figuren 1 und 2 zu entnehmen ist, ist die Sicke 21 im wesentlichen durch die beiden, in das Gehäuseinnere geboge-

3

nen Gehäuselappen 21a und 21b gebildet, wodurch sich im Sickenbereich eine Gehäuseöffnung 27 ergibt. Zwischen dieser und dem Leuchtring 5 ist in einer Verbindungsgeraden von Lampe 19 zu Leuchtring 5 eine weitere Gehäuseöffnung 28 gebildet. Mittelsder Lampe 19 kann damit einerseits die Gehäuseöffnung 6 ausgeleuchtet werden, andererseits das Gehäuseäußere, beispielsweise ein benachbart zum Zigarettenanzünder befindlicher Ascher durch die Gehäuseöffnung 27, darüber hinaus wird durch die weitere Gehäuseöffnung 28 der Leuchtring 5 angestrahlt. Gleichzeitig werden durch Öffnungen 29 in der Schutz- und Führungsscheibe 30 die Drucktaste 12 aus transparentem Kunststoff und das Symbol 31 angestrahlt.

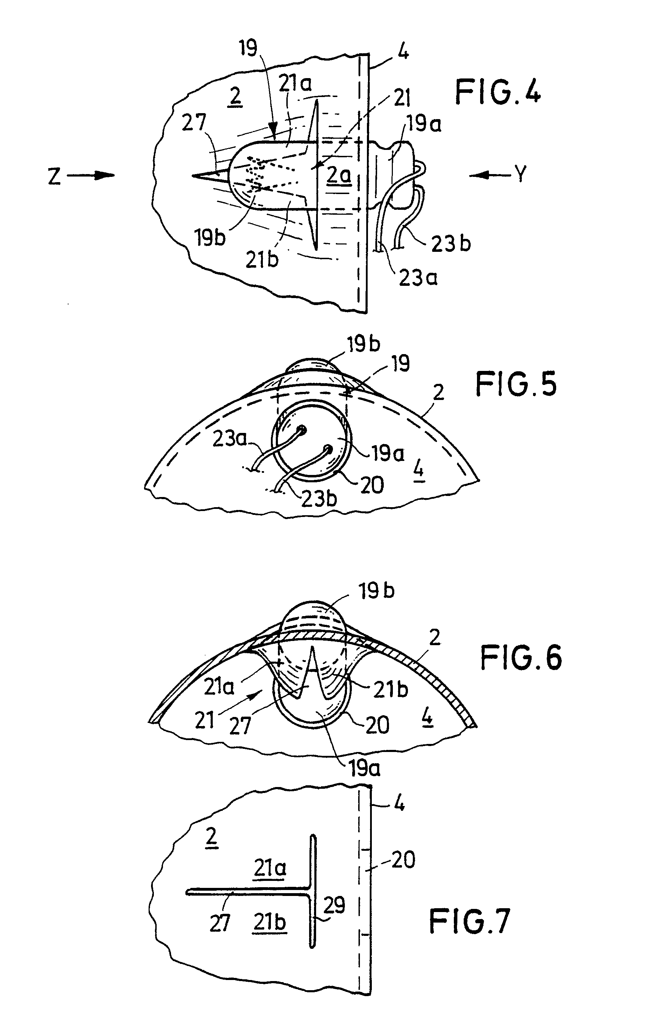

Die Figuren 4 bis 7 zeigen für einem im wesentlichen unveränderten Zigarettenanzünder eine Modifikation der Sicke 21. Mit der Ausführungsform nach den Figuren 1 bis 3 übereinstimmende Teile sind der Einfachheit halber mit gleichen Bezugsziffern bezeichnet. Bei dieser Modifikation wird, wie der Darstellung der Figur 7 zu entnehmen ist, die Sicke aus einem T-förmigen Schlitz im zylindrischen Mantelbereich 2 gebildet, wobei der Balken 29 des Schlitzes parallel zum Boden 4 benachbart der Bohrung 20 positioniert ist. Durch Einbiegen der beiden Gehäuselappen 21a und 21b entsteht die in den Figuren 4 bis 6 gezeigte Sicke mit der Gehäuseöffnung 27, wobei hier die Lampe 19 zwischen dem geringfügig nach oben gewölbten zylindrischen Mantelbereich 2a, den beiden Gehäuselappen 21a und 21b sowie der Bohrung 20 im Gehäuseboden 4 gehalten ist. Diesbezüglich untergreifen die Gehäuselappen 21a und 21b den Wendelbereich 19b der Lampe 19 und es übergreift der zylindrische Mantelbereich 2a den Anschlußbereich 19a der Lampe 19. Die Anschlußleitungen 23a und 23b stabilisieren wiederum die Position der Lampe 19.

**Patentansprüche**

1. Elektrischer Zigarettenanzünder, insbesondere für Kraftfahrzeuge, mit einem in ein Gehäuse einsteckbaren und nach Einschaltung und Erwärmung herausnehmbaren Glühkopf, sowie einer Lampe mit Anschlußleitungen, wobei die Lampe durch eine in der Wandung des Gehäuses befindliche Gehäuseöffnung das Gehäuseinnere und -äußere ausleuchtet, **dadurch gekennzeichnet**, daß die Gehäusewandung (2) eine Sicke (21) aufweist, und die Lampe (19) durch die Sicke (21) und die Anschlußleitungen (23a, 23b) im Gehäuse (1) gehalten wird.

2. Zigarettenanzünder nach Anspruch 1, **dadurch gekennzeichnet**, daß die Anschlußleitungen (23, 23b) als relativ steife Drähte ausgebildet sind, die Bestandteil der Lampe (19) sind.

3. Zigarettenanzünder nach Anspruch 1 oder 2, **dadurch gekennzeichnet**, daß die Sicke (21) geschlitzt ausgebildet und hierdurch die Gehäuseöffnung (27) gebildet ist.

4. Zigarettenanzünder nach Anspruch 3, **dadurch gekennzeichnet**, daß die Sicke (21) und die Gehäuseöffnung (27) durch zwei benachbart zum Gehäuseboden (4) in das Innere des Gehäusemantels (2) gerichtete Gehäuselappen (21a, 21b) gebildet sind, sowie der Gehäuseboden (4) benachbart zur Sicke (21) mit einem Durchgangsloch (20) versehen ist, zur Aufnahme des Wendelbereiches (19b) der Lampe (19) zwischen den Gehäuselappen (21a, 21b) und des Anschlußbereiches (19a) der Lampe (19) im Loch (20).

5. Zigarettenanzünder nach Anspruch 4, **dadurch gekennzeichnet**, daß der Durchmesser des Loches (20) geringfügig größer ist als der Durchmesser der Lampe (19).

6. Zigarettenanzünder nach Anspuch 4 oder 5, **dadurch gekennzeichnet**, daß eine zusätzliche Gehäuseöffnung (28) vorgesehen ist, die in größerem Abstand zum Gehäuseboden (4) als die der Sicke (21) zugeordnete Gehäuseöffnung (27) im Gehäuse (1) angeordnet ist und durch die ein das Gehäuse (1) umschließender Leuchtring (5) angestrahlt wird.

7. Zigarettenanzünder nach Anspruch 4, 5 oder 6, **dadurch gekennzeichnet**, daß durch zusätzliche Öffnungen (29) in der Schutz- und Führungsscheibe (30) die Drucktaste (12) aus transparentem Kunststoff und das Symbol (31) angestrahlt werden.

8. Zigarettenanzünder nach einem der Ansprüche 1 bis 6, **dadurch gekennzeichnet**, daß ein zweipoliger Stecker (15, 16) für den Zigarettenanzünder vorgesehen ist, und die steckerseitigen Enden der Anschlußleitungen (23a, 23b) der Lampe (19) zwischen leitenden, steckerseitigen Klemmplatten (4; 25) und Isolierplatten (18; 18) geklemmt sind.

FIG. 1

EP 0 437 250 A2

FIG. 2

FIG. 3

FIG.4

FIG.5

FIG.6

FIG.7